# EUROPÄISCHE PATENTSCHRIFT

(11) **EP 2 353 777 B1**
(45) Veröffentlichungstag und Bekanntmachung des Hinweises auf die Patenterteilung: **21.12.2011**
(21) Anmeldenummer: 10152923.8
(22) Anmeldetag: 08.02.2010
(51) Int. Cl.: B23Q 1/76

(54) **Selbstzentrierende Lünette**
Self-centring support
Lunettes à centrage automatique

(43) Veröffentlichungstag der Anmeldung: 10.08.2011
(73) Patentinhaber: SMW-AUTOBLOK Spannsysteme GmbH, 88074 Meckenbeuren (DE)
(72) Erfinder: Helm, Peter, 88074 Meckenbeuren (DE); Maurer, Eckhard, 88094 Oberteuringen (DE)
(74) Vertreter: Engelhardt, Guido

(56) Entgegenhaltungen:
- EP-A1- 0 562 180
- DE-A1- 3 611 201
- DE-C- 874 548

## Beschreibung

Die Erfindung bezieht sich auf eine selbstzentrierende Lünette nach dem Oberbegriff des Patentanspruches 1.

Solche Lünetten werden von der Patentanmelderin seit Jahrzehnten gefertigt und erfolgreich im Markt platziert. Beispielsweise kann der EP 0 562 180 B1 eine solche Lünette entnommen werden.

Diese Lünetten werden üblicherweise durch einen Druckkolben angetrieben, durch den das Mittelstück axial in Richtung auf das einzuspannende Werkstück vorwärts oder von diesem zurück bewegt wird. Der Druckkolben wird dabei mit Hydraulikflüssigkeit beaufschlagt, so dass dieser die Vor- und Rückwärtsbewegung vollzieht, die für die Einspann- und Entriegelungsbewegungen notwendig sind.

Es besteht seit Jahrzehnten ein erheblicher Bedarf, eine andersartiger Antriebseinrichtung als Alternative für den bekannten Hydraulikantrieb mit Druckkolben zur Verfügung zu stellen.

Aus der DE 3611201 A1 ist eine selbstzentrierende Lünette zu entnehmen. Die als Rollenschieber ausgebildeten Lünettenarme sind mit einem freien Ende an einer im Lünettengehäuse axial bewegbaren Zustellspindel abgestützt. Die Zustellspindel ist über Horizontalschieber mit einem Zahnradgetriebe gekoppelt, das über Zahnstangen die Rollenschieber bewegt. Die Zahnräder sind mittels zweier Elektromotoren angetrieben. Die beiden Zustellgeschwindigkeiten der Spindel werden über einen Getriebemotor und einen Schnecken-Getriebemotor bewirkt. Nach dem Umschalten von Eilgang auf Schleichgang klemmt eine Scheibenbremse eine auf der Keilriemenscheibe angebrachte Scheibe fest. Auf diese Weise wird die Mitnehmerhülse und somit die Spindelmutter fixiert und eine Relativbewegung der Spindelmutter bei laufendem Schneckengetriebemotor unterbunden.

Nach Erreichen der Spannstellung, also nachdem die drei Rollen auf dem einzuspannenden Werkstück aufliegen, erfolgt die Einstellung der Spannkraft mittels des Schleichgangantriebes. Nach Erreichen der Spannkraft wird der zweite Elektromotor, der den Schleichgangantrieb bewirkt, abgeschaltet. Eine hydraulische Klemmeinrichtung verklemmt die drei Rollenschieber.

Als nachteilig bei diesem Stand der Technik hat sich herausgestellt, dass Messeinrichtungen vorzusehen sind, um die Zustellkraft, die die Lünettenarme auf das einzuspannende Werkstück ausüben, zu erfassen, um somit zwischen den beiden Elektromotoren ein Umschalten vorzunehmen.

Darüber hinaus ist bei diesem Stand der Technik nachteilig, dass die Spannkraft ausschließlich durch die hydraulische Klemmeinrichtung während des Einspannzustandes ausgeübt ist. Diese Einspannsituation berücksichtigt nämlich nicht die Abnutzung der auf dem Werkstück anliegenden Rollen während des Betriebszustandes und vor allen Dingen werden Verkleinerungen des zu bearbeitenden und eingespannten Werkstückes nicht erfasst. Je weiter demnach das eingespannte Werkstück einer spanabhebenden Bearbeitung unterzogen ist, desto kleiner wird die Spannkraft, die auf das Werkstück einwirkt. Diese Spannkraft kann im ungünstigsten Falle sogar Null sein, so dass die Spannfunktion der Lünette vollständig aufgehoben ist.

Es ist daher Aufgabe der Erfindung, eine selbstzentrierende Lünette der eingangs genannten Gattung derart weiterzubilden, dass die Zustell- und Spannbewegungen der drei Halteglieder der Lünette mittels einer elektrisch zu betreibenden Antriebseinrichtung, insbesondere mittels eines Elektromotors, erfolgt, die eine Rotationsbewegung durchführt, wobei diese in eine axiale Zustell- und Rückhotbewegung des Mittelstückes umgewandelt ist. Darüber hinaus sollen die Zustell- und Spannbewegungen der Lünette mittels der Stellung des Elektromotors exakt messbar und kontrollierbar sein. Des Weiteren sollen die Rotationsbewegungen des Elektromotors sowohl für die möglichst rasche Zustellung als auch für die Spannbewegungen der Lünettenarme verwendbar sein.

Diese Aufgaben werden erfindungsgemäß durch die Merkmale des Patentanspruchs 1 gelöst.

Weitere vorteilhafte Weiterbildungen der Erfindung ergeben sich aus den Unteransprüchen.

Da zwischen dem umschaltbaren Elektromotor und dem axial in Richtung auf das Werkstück zu bewegenden Mittelstück eine Antriebseinheit angeordnet ist, die in trieblicher Wirkverbindung sowohl mit dem Elektromotor als auch mit dem Mittelstück steht, wird erreicht, dass die Rotationsbewegungen des Elektromotors zunächst in eine erste axiale Zustellgeschwindigkeit des Mittelstückes umgewandelt ist. Nach Erreichen einer Kontaktposition der drei Halteglieder der Lünette auf dem Werkstück ist vorteilhafterweise die Rotationsbewegung des Elektromotors einsetzbar, um die drei Halteglieder zu verspannen, denn die Antriebseinheit wandelt die Rotationsbewegungen des Elektromotors in diesem Betriebszustand in eine zweite Zustellgeschwindigkeiten des Mittelstückes um, so dass die auf das Werkstück gerichteten Zustell- und Spannkräfte in zwei verschiedenartige Kraftbeträge umgewandelt sind.

Die unterschiedlichen Zustellgeschwindigkeiten des Mittelstückes werden mittels einer zwangläufig schaltbaren Kupplung erreicht, mittels der die Antriebseinheit in zwei unterschiedliche Schaltstellungen selbsttätig umschaltbar ist. Folglich kann die Rotationsbewegung des Elektromotors ausgehend von der geöffneten Stellung der drei Halteglieder bis zu deren Spannstellung an dem Werkstück ohne zeitliche Unterbrechung genutzt werden, um das Mittelstück und die drei mit diesem trieblich verbundenen Haltegliedern in eine Zustell- als auch in eine Spannbewegung zu versetzen. Darüber hinaus kann die Rotationsachse des Elektromotors vorteilhafterweise parallel oder fluchtend zu der Bewegungsrichtung der Lünette angeordnet sein, so dass eine kompakte und somit geringe Bauraumgröße der gesamten Lünette mit Elektromotor zur Verfügung steht.

Besonders vorteilhaft ist durch die Steuerung des Elektromotors gewährleistet, dass die drei Halteglieder, durch die das Werkstück zentrisch in diesen gehalten ist, beim Auftreffen nicht beschädigt werden bzw. die Oberfläche des Werkstückes beschädigen. Unmittelbar bevor nämlich die drei Halteglieder auf die Oberfläche des Werkstückes zur Auflage gelangen wird diese Position erfasst und die Geschwindigkeit des Elektromotors kurzfristig reduziert. Anschließend erhöht sich das Drehmoment des Elektromotors, da die Halteglieder in ihrer Bewegungsfreiheit limitiert sind. Die Rotationen des Elektromotors können gemessen werden, so dass die Halteglieder, unmittelbar bevor diese zur Anlage mit der Oberfläche des Werkstückes auftreffen, durch eine Reduzierung der Rotationsgeschwindigkeit des Elektromotors abgebremst sind. Mittels der Stellung des Elektromotors kann der Bereich der Halteglieder geschützt werden, da die Werkzeugmaschine in ihrer Bewegungsausführung die Position der Halteglieder berücksichtigt.

Zwischen der Eil- und der Spannbewegung oder vice versa entsteht beim Übergang keine zeitliche Verzögerung, so dass vorteilhafterweise eine extrem schnelle Zustellung der drei Halteglieder in Richtung auf das Werkstück gegeben ist und dass innerhalb einer weiteren gering bemessenen Zeitspanne das Werkstück durch eine weitere begrenzte Rotation des Elektromotors das Werkstück zwischen den drei Haltegliedern zuverlässig eingespannt ist.

In der Zeichnung ist nachfolgend ein erfindungsgemäßes Ausführungsbeispiel dargestellt, das nachfolgend näher erläutert ist. Im Einzelnen zeigt:
- Figur 1: eine Lünette mit drei in einer gemeinsamen Ebene angeordneten Hal- teglieder, die über ein axial verschiebbar in dem Gehäuse der Lünette gehaltenes Mittelstück in Richtung auf ein Werkstück zustellbar sind, und mit einer zwischen dem Mittelstück und einem Elektromotor ange- ordneten Antriebseinheit, durch die das Mittelstück axial bewegbar ist, im Schnitt und in der Ausgangsposition,
- Figur 2: die Lünette gemäß Figur 1, nach Beendigung der Zustellbewegung der drei Halteglieder auf das Werkstück,
- Figur 3: die Lünette gemäß Figur 1 in einer Spannposition der drei Halteglieder,
- Figur 4: die Lünette gemäß Figur 2 entlang der Schnittlinie IV-IV,
- Figur 5: die Lünette gemäß Figur 3 entlang der Schnittlinie V-V,
- Figur 6: den Drehmomentverlauf des Elektromotors gemäß Figur 1 für den An- trieb der Lünette sowie den zurückgelegten Weg des Mittelstückes,
- Figur 7: eine perspektivische Ansicht eines Flansches und einer Welle, die Be- standteil der Antriebseinheit gemäß Figur 1 sind, im vormontierten Zu- stand,
- Figur 8: die Lünette gemäß Figur 3 entlang der Schnittlinie VIII-VIII und
- Figur 9: die Lünette gemäß Figur 1, im vormontierten Zustand und in perspekti- vischer Ansicht.

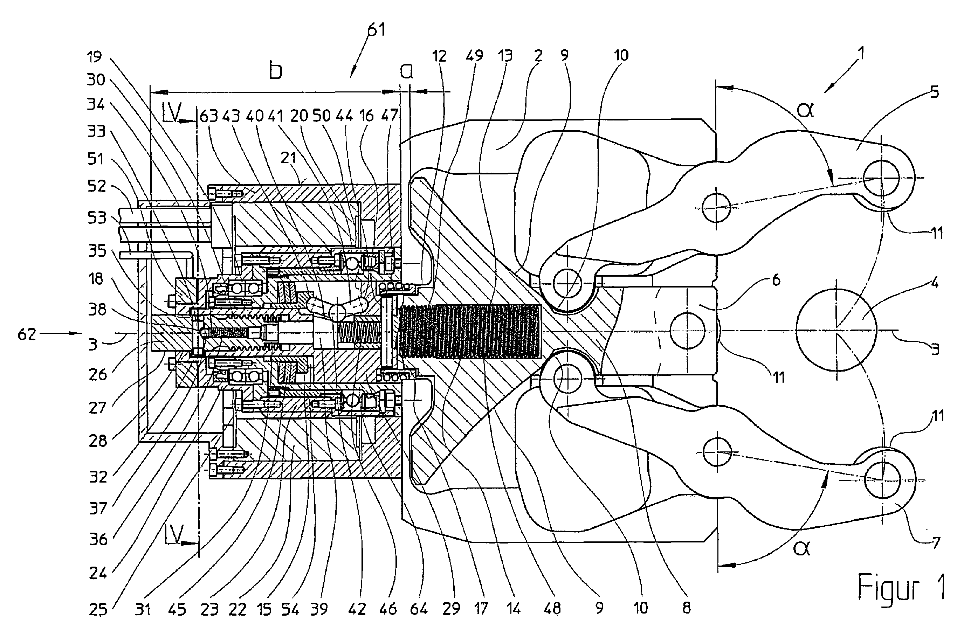

In Figur 1 ist eine selbst zentrierende Lünette 1 zum Aufspann und/oder zur Halterung eines Werkstückes 4 auf einer Drehmaschine gezeigt. An einem Gehäuse 2 der Lünette 1 sind dabei drei Halteglieder 5, 6 und 7 in nachfolgend näher erläuternder Weise angebracht. Die beiden äußeren Halteglieder 5 und 7 sind als spiegelbildlich zueinander angeordnete Winkelhebel ausgestaltet, die verschwenkbar an dem Gehäuse 2 angelenkt sind. Das mittlere Halteglied 6 ist an einem Mittelstück 8 axial angeformt, das verschieblich in Richtung auf das Werkstück 4 bzw. vice versa bewegbar und in dem Gehäuse 2 drehfest gehalten ist.

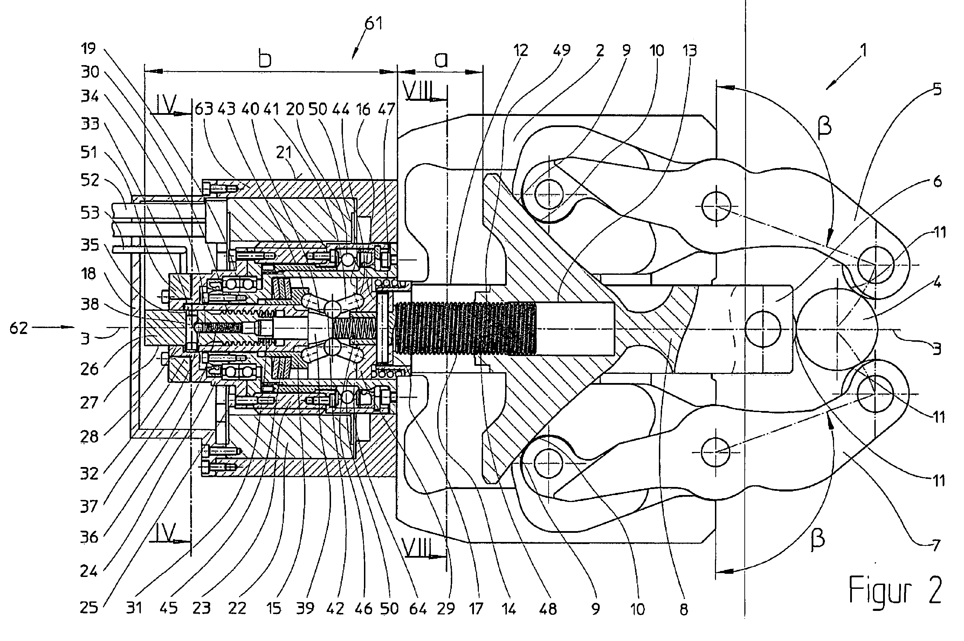

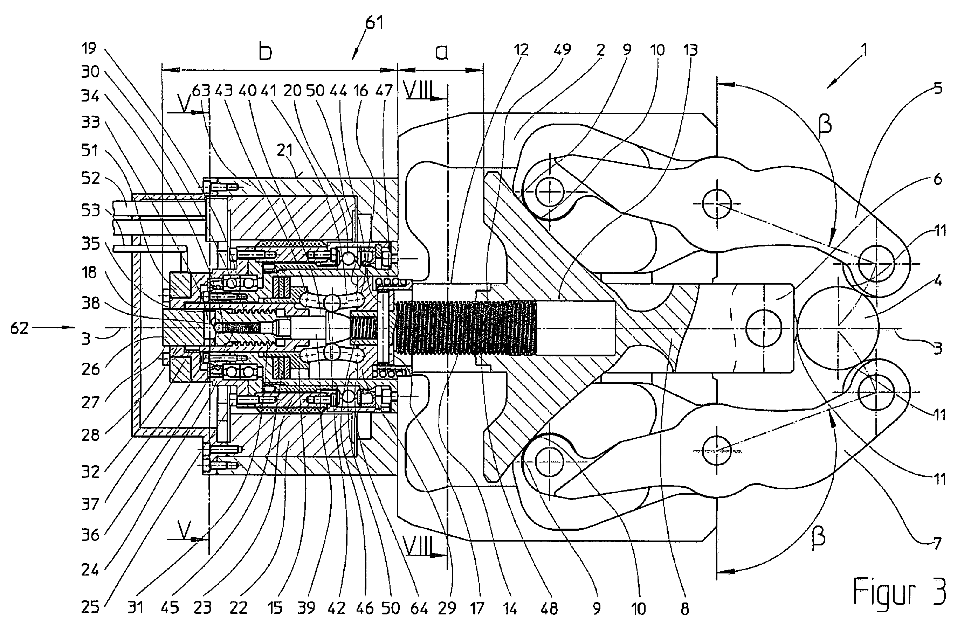

Des Weiteren weist das Mittelstück 8 zwei nach außen weisende Steuerflächen 9 auf, die spiegelbildlich zueinander gegenüber liegen. Die inneren freien Enden 10 der beiden äußeren Halteglieder 5 und 7 liegen während der Spannbewegung unter Vorspannung an den Steuerflächen 9 an, können allerdings auch andersartig an diese gekoppelt sein, so dass die Steuerfläche 9 und die freien Enden 10 der Halteglieder 5, 7 in ständigem Wirkkontakt miteinander stehen. Sobald demnach das Mittelstück 8 in Richtung auf das Werkstück 4 zugestellt ist, bewegen sich die Halteglieder 5, 6 und 7 derart synchron, dass diese gemeinsam und gleichzeitig mit ihren Werkstückkontaktelementen 11, bspw. Rollen, Gripper, Pads, an dem Werkstück 4 zur Anlage gelangen. Die Bewegung zwischen dem Öffnungswinkel α der beiden äußeren Halteglieder 5 und 7 und der gewünschten Anlage der drei Halteglieder 5, 6 und 7 an dem Werkstück 4 wird als Zustellbewegung oder Eilhub bezeichnet. Nachdem die drei Halteglieder 5, 6 und 7 auf der Oberfläche des Werkstückes 4 anliegen, ist dieses einzuspannen. Die nach der Zustellbewegung zu erfolgende Spannbewegung der drei Halteglieder 5, 6 und 7 ist den Figuren 2 und 3 entnehmbar. Nach Beendigung der Spannbewegung liegen die Rollen 11 der Halteglieder 5, 6 und 7 unter Vorspannung auf dem Werkstück 4 an, so dass dieses zuverlässig eingespannt und an der Lünette 1 abgestützt ist. Die Rollen 11 können auch als Pads oder Gripper ausgestaltet sein.

Ausgehend von der in Figur 1 abgebildeten Ausgangsposition, in der die drei Halteglieder 5, 6 und 7 jeweils den größtmöglichen Abstand zu dem einzuspannenden Werkstück 4 einnehmen, sollen diese nunmehr durch einen Elektromotor 21 auf das Werkstück 4 möglichst ohne zeitliche Verzögerung zugestellt werden und nach Beendigung der Zustellbewegung soll durch den Elektromotor 21 auch die Spannbewegung der drei Halteglieder 5, 6 und 7 ermöglicht sein.

Der Elektromotor 21 besteht aus einem Stator 22 und einem Rotor bzw. Läufer 23. An dem Rotor 23 ist ein mittels Schrauben 25 befestigter Flansch 24 angebracht. Der Flansch 24 weist ein Rohrstück auf, in dem eine Innenverzahnung 28 eingearbeitet ist. Die Rotationsbewegung des Rotors 23 wird demnach auf den Flansch 24 und von diesem auf die Welle 26 übertragen.

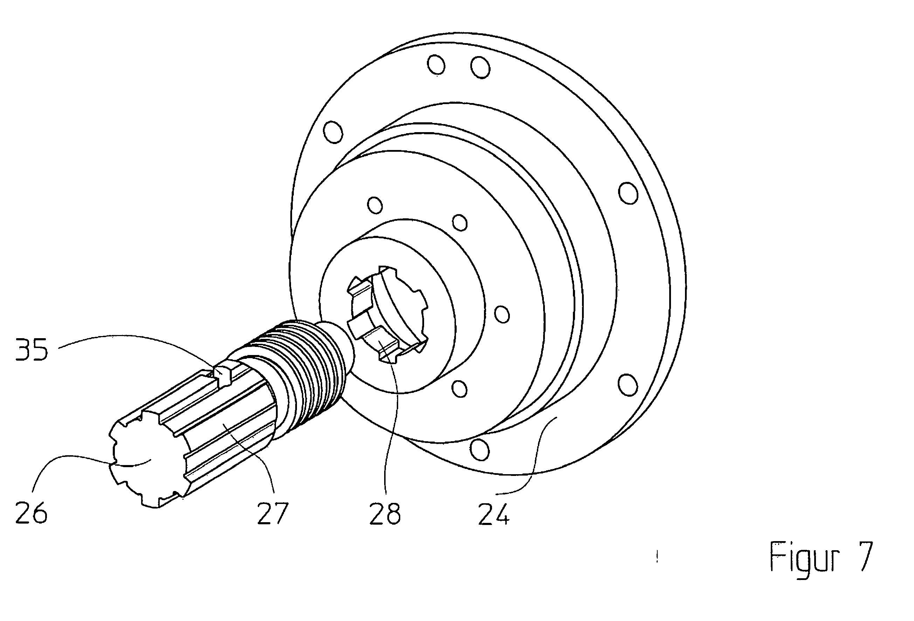

Eine Antriebseinheit 61, die im Inneren eines an dem Gehäuse 2 befestigten Antriebseinheitsgehäuse 63 angeordnet ist, ermöglicht nunmehr die Umwandlung der Rotationsbewegung des Elektromotors 21 in eine axiale Zustellbewegung, die auf das Mittelstück 8 einwirkt. Die Antriebseinheit 61 besteht dabei zunächst aus einer Welle 26, die trieblich mit dem Flansch 24 mittels der Innenverzahnung 28 verbunden ist, da auf der Außenseite der Welle 26 eine Außenverzahnung 27 eingearbeitet ist, die in die Innenverzahnung 28 eingreift. Insbesondere Figur 7 ist zu entnehmen, dass die Außenverzahnung 27 der Welle 26 parallel zu der Längsachse 3 der Lünette 1 ausgerichtet ist und dass somit die Welle 26 entlang der Innenverzahnung 28 des Flansches 24 verschiebbar ist.

Als weiterer Bestandteil der Antriebseinheit 61 ist eine Hohlwelle 29 anzusehen, die über eine Kupplung 62 in lösbarer formschlüssiger Wirkverbindung mit der Welle 26 während der Zustellbewegung der drei Halteglieder 5, 6 und 7 steht. Die Kupplung 62 kann ohne weiteres als Rutschkupplung ausgebildet sein, so dass eine kraftschlüssige Wirkverbindung zwischen der Welle 26 und der Hohlwelle 29 vorhanden ist, durch die bei übersteigen eines vorgegebenen Drehmomentes die Kraftübertragung gelöst ist.

Die Kupplung 62 wird im Wesentlichen von einem Stift 33 gebildet, der in eine Bohrung 35, die senkrecht zu der Längsachse 3 verläuft und in die Welle 26 eingearbeitet ist, eingesetzt ist. Diese Anordnung kann auch um 90° verdreht sein. Der Stift 33 ist im gezeigten Ausgangszustand gemäß Figur 1 und vor Einleiten der Spannbewegung der Halteglieder 5, 6 und 7 gemäß Figur 2 in eine Vertiefung 32 gedrückt, die in die Innenseite der Hohlwelle 29 eingearbeitet ist.

Fluchtend zu der Längsachse 3 ist in die Welle 26 zudem eine Bohrung 34 vorgesehen, in die eine Schraubendruckfeder 36 eingesetzt ist. An dem dem Stift 33 zugewandten freien Ende der Schraubendruckfeder 36 ist eine Kugel 37 angeordnet, die in eine in den Stift 33 eingearbeitete Kerbe 38 durch die Schraubendruckfeder 36 eingedrückt ist.

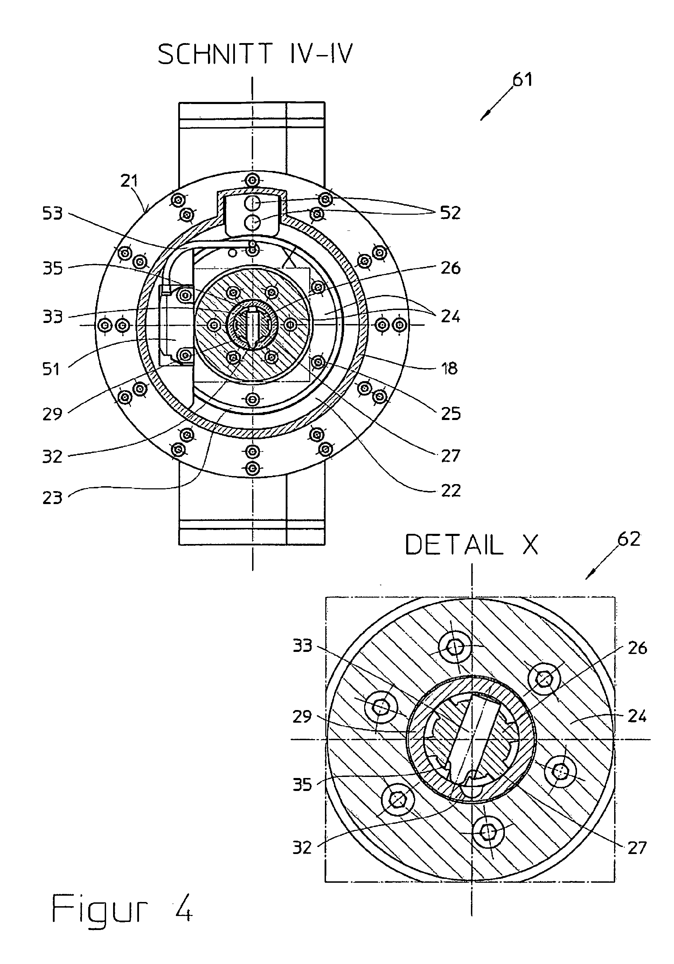

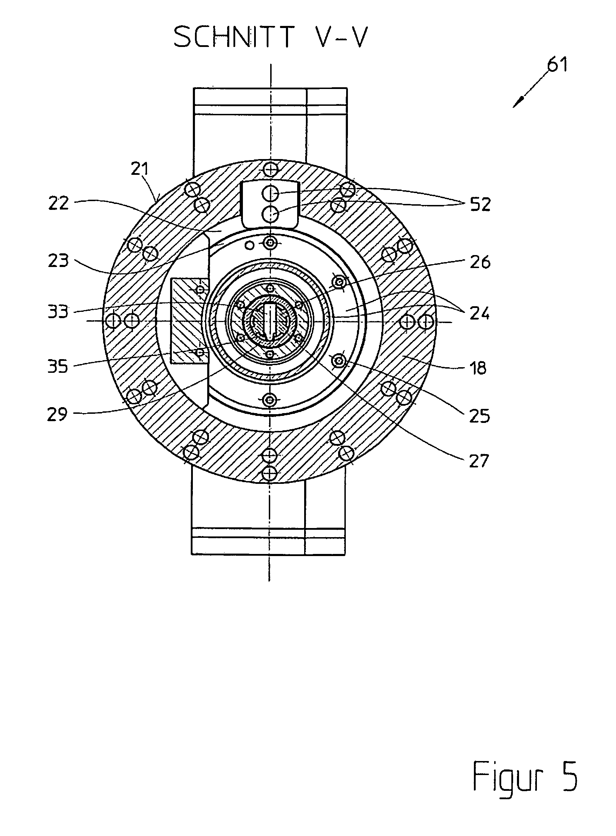

Insbesondere aus den Figuren 4 und 5 kann entnommen werden, dass der Stift 33 an einer Seite an einer radial verlaufenden Wand anliegt und auf der gegenüberliegenden Seite eine Wand vorgesehen ist, die aus der radialen Richtung geneigt verläuft, so dass eine schräge nach außen verlaufende Fläche 32 entsteht. Die geneigt verlaufende Fläche 32 liegt dabei in Antriebsrichtung des Elektromotors 21; die radial verlaufende Wand dient im Wesentlichen als Anschlag für den Stift 33, so dass dieser über die radiale Wand nicht angehoben werden kann. Die radiale Wand hält somit in einer auf diese einwirkende Kraftrichtung den Stift 33 in der Vertiefung 32 der Hohlwelle 29.

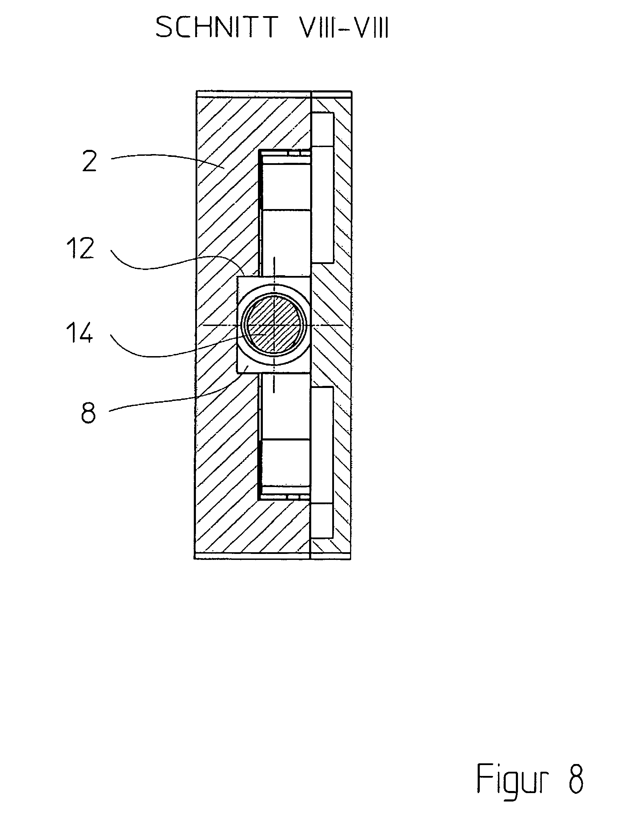

Wenn nunmehr der Elektromotor 21 in Rotation versetzt ist, bewegt sich von der in Figur 1 abgebildeten Ausgangsstellung das Mittelstück 8 in Richtung auf das Werkstück 4, denn der Flansch 24 treibt die Welle 26 und diese über die Kupplung 62 die Hohlwelle 29 an. In das Gehäuse 2 ist dabei gemäß Figur 8 eine Aufnahmeöffnung 12 eingearbeitet, in die das Mittelstück 8 axial verschiebbar, jedoch drehfest, eingesetzt ist.

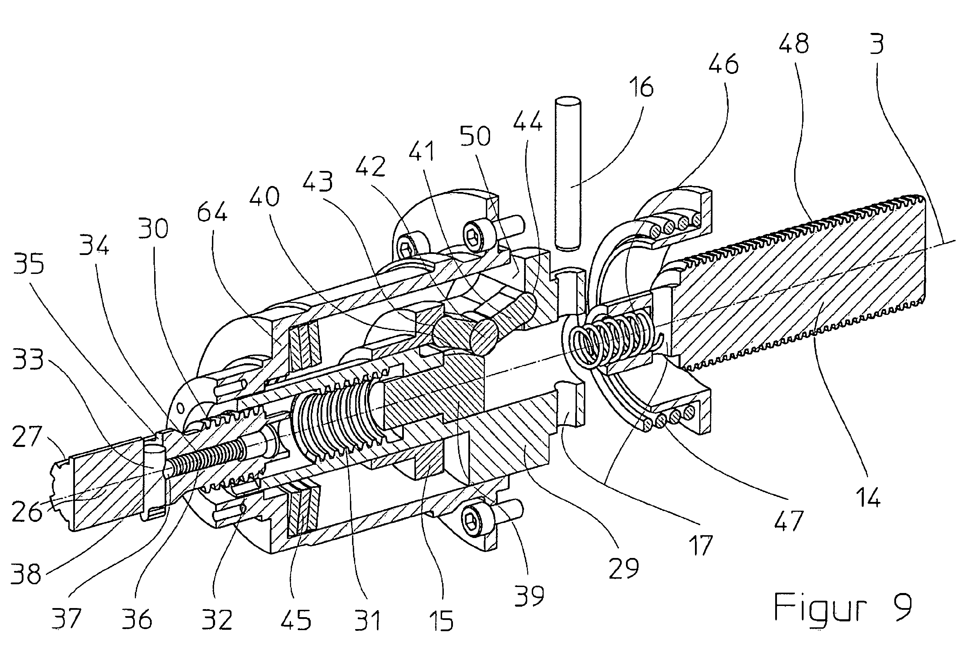

In das Mittelstück 8 ist ferner eine Gewindebohrung 13 eingearbeitet, in die eine Gewindespindel 14 eingedreht ist. Die Gewindespindel 14 ist über einen Haltebolzen 16 mit der Hohlwelle 29 fest verbunden. Die konstruktive Ausgestaltung der Hohlwelle 29 ist aus den Figuren 1 und 9 ersichtlich. Dort ist in dem unteren Längsschnitt die Querschnittsform der Hohlwelle 29 abgebildet. Die Rotationsbewegungen der Hohlwelle 29 wirken somit auf die Gewindespindel 14 ein, so dass diese in Rotation versetzt wird. Dadurch, dass das Mittelstück 8 in dem Gehäuse 2 drehfest gehalten ist, entsteht eine schraubenförmige Relativbewegung zwischen der Gewindespindel 14 und dem Mittelstück 8. Vorteilhafterweise ist die Gewindespindel 4 mit einem Trapezgewinde 48 ausgerüstet, so dass die Rotationsgeschwindigkeit der Gewindespindel 14 in einem bestimmten Übersetzungsverhältnis an das Mittelstück 8 weitergegeben ist, durch das gewährleistet ist, dass die erste Zustellgeschwindigkeit für die drei Halteglieder 5, 6 und 7 anliegt und diese in einem möglichst kurz bemessenen Zeitintervall zur Anlage mit dem Werkstück 4 bewegt sind.

Mittels einem in Figur 4 gezeigten Drehzahlmesser 51 wird dabei die Winkelposition des Elektromotors 21 festgestellt und über eine nicht dargestellte Steuerelektronik ausgewertet. Die Steuerelektronik ermittelt demnach permanent die Position der drei Halteglieder 5, 6 und 7 in Bezug auf das Werkstück 4, und zwar durch die Messung der Stellung des Elektromotors 21, so dass der Elektromotor 21 in seiner Leistung unmittelbar bevor die Halteglieder 5, 6 und 7 auf das Werkstück 4 auftreffen, reduziert werden kann. Durch diese Steuermaßnahme wird erreicht, dass die Rollen 11 der Halteglieder 5, 6 und 7 auf das Werkstück 4 nicht aufschlagen und dieses beschädigen bzw. durch das Werkstück 4 selbst beschädigt werden. Zudem wird durch diese Steuermaßnahme die Lärmemission reduziert.

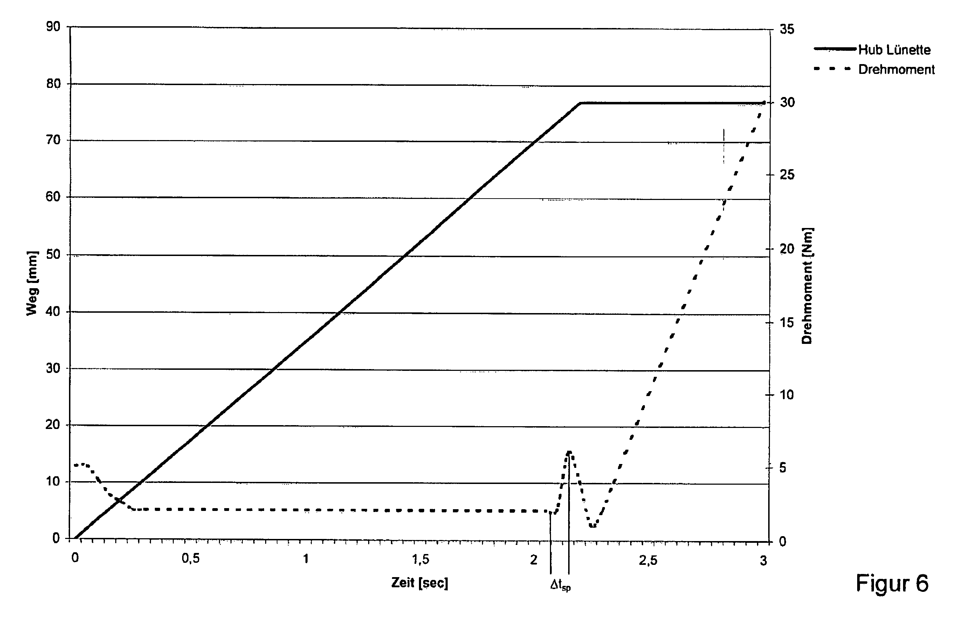

In Figur 6 ist der Drehmomentverlauf im Verhältnis mit dem zurückgelegten Weg der drei Halteglieder 5, 6 und 7 in einem Diagramm wiedergegeben. Nachdem der Elektromotor 21 angefahren ist, pendelt sich das Drehmoment auf einen konstanten Wert ein. Sobald die Halteglieder 5, 6 und 7 in Wirkverbindung mit dem Werkstück 4 treten, steigt das Drehmoment, das von dem Elektromotor 21 aufzuwenden ist, erheblich an. In dem eingezeichneten Zeitintervall Δ tₛₚ (Zeitintervall für die Einleitung der Spannbewegung gemäß Figur 2) wird demnach die Kupplung 62, wie dies aus Figur 2 ersichtlich ist, gelöst, so dass die triebliche Wirkverbindung zwischen der Welle 26 und der Hohlwelle 29 unterbrochen ist. Sobald diese Entriegelung zwischen der Welle 26 und der Hohlwelle 29 stattgefunden hat, sinkt das Drehmoment des Elektromotors 21 auf einen Wert ab, der unterhalb des Drehmomentes für die Zustellung der Halteglieder 5, 6 und 7 vorliegt und steigt anschließend linear an, und zwar so lange, bis die Spannbewegung der Halteglieder 5, 6 und 7 beendet ist.

Die Einleitung der Spannbewegung für die drei Halteglieder 5, 6 und 7 ist in Figur 2 abgebildet. Dort ist der Stift 33 noch in der Vertiefung 32 eingerastet. Aufgrund der Drehmomentserhöhung, die über die Halteglieder 5, 6 und 7 auf das Mittelstück 8 die Gewindespindel 14 und von dieser auf die Hohlwelle 29 weitergegeben ist, wirkt diese Drehmomentserhöhung auf den Stift 33. Da die aus der Radialen geneigt verlaufende Fläche 32 in Drehrichtung des Elektromotors 21 verläuft, kann der Stift 33 entgegen der von der Schraubendruckfeder 36 aufgebrachten Kraft aus der Vertiefung 32 herausrutschen, so dass die formschlüssige Wirkverbindung zwischen der Welle 26 und der Hohlwelle 29 gelöst ist.

Gleichwohl rotiert die Welle 26 weiter, da der Kraftfluss bzw. das Drehmoment, das von dem Elektromotor 21 zur Verfügung gestellt wird, nicht abgeschaltet ist. Um nunmehr eine axial wirkende Spannbewegung zu erreichen, ist auf der Außenseite der Welle 26 ein Außengewinde 30 eingearbeitet. In die Hohlwelle 29 ist ein Innengewinde 31 vorgesehen. Das Außengewinde 30 der Welle 26 und das Innengewinde 31 der Hohlwelle 29 stehen somit in formschlüssiger Wirkverbindung, und zwar nach Art einer Verzahnung. Sobald die Kupplung 62 zwischen der Welle 26 und der Hohlwelle 29 gelöst ist, rotiert die Welle 26 weiter, so dass eine relative Rotationsbewegung zwischen der Welle 26 und der Hohlwelle 29 über die Innen- und Außengewinde 30 bzw. 31 erfolgt.

Die jeweilige Verschiebung bzw. der zurückgelegte Weg ist in den Figuren 2 und 3 mittels des Buchstaben a und b angegeben.

Die Welle 26 wird demnach schraubenförmig in Richtung auf das Werkstück 4 zugestellt. An dem freien Ende der Welle 26 ist ein Bolzen 39 vorgesehen. Zwischen der Welle 26 und dem Bolzen 39 besteht eine Anlagefläche. Dies kann insbesondere aus Figur 9 entnommen werden.

Der Bolzen 39 weist einen von der Welle 26 abgewandten Bereich 40 auf, der pyramidenförmig ausgestaltet ist. Dabei verjüngt sich die Außenkontur des Bolzens 39 in Richtung auf das Werkstück 4. Das pyramidenförmige freie Ende 40 des Bolzens 39 wirkt als schiefe Ebene, durch die ein auf dem pyramidenförmigen freien Ende 40 angeordneter Kniehebel 41 abgestützt und durch die während der axialen Zustellbewegung des Bolzens 39 eine Spannkraft erzeugt ist, die in Richtung auf das Werkzeug verläuft. In Figur 2 und 3 sind zwei Kniehebel 41 vorgesehen, die paarweise in einer gemeinsamen Ebene liegen und in einer in der Hohlwelle 29 eingearbeiteten Aussparung 50 eingesetzt sind. In Figur 1 ist lediglich ein Kniehebel 41 vorgesehen, um den Aufbau der Hohlwelle 29 im Bereich des Bolzens 39 zu zeigen.

Der Kniehebel 41 besteht aus einem auf dem pyramidenförmigen freien Ende 40 aufliegenden Gelenk 42, an dem zwei Stege 43 und 44 angebracht sind. Die freien Enden 43' bzw. 44' der Stege 43, 44 sind in der Hohlwelle 29 und in einem Übertragungskörper 15 abgestützt. Zwischen den im Querschnitt rohrförmigen Übertragungskörper 15, der mittels einer Verdrehsicherung 54 an der Außenkontur der Hohlwelle 29 befestigt ist, ist ein Paket von Tellerfedern 45 angeordnet.

Ein die Hohlwelle 29 umschließendes Lagergehäuse 64 nimmt die Tellerfedern 45 auf, wobei der Übertragungskörper 15 im Inneren der Hohlwelle 29 angeordnet ist. Das Lagergehäuse 64 ist fest mit dem Lünetten-Gehäuse 2 verbunden, wodurch gewährleistet ist, dass die beim Zusammendrücken der Tellerfedern 45 entstehende axial gerichtete Druckkraft zuverlässig abgestützt ist und in Richtung der Längsachse 3, also auf das Werkstück 4, verläuft.

Des Weiteren ist zwischen dem Bolzen 39 und dem Übertragungskörper 15 eine Schraubendruckfeder 46 vorgesehen, durch die eine Rückstellkraft auf den Bolzen 39 ausgeübt wird, sobald der Einspannzustand für das Werkstück 4 freigegeben ist.

In Figur 3 ist gezeigt, dass der Kniehebel 41 durch das axiale Verschieben des Bolzens 39 in Richtung auf das Werkstück 4 aufgeweitet ist. Es ist besonders vorteilhaft, wenn zwei Kniehebel 41 paarweise gegenüberliegend zueinander auf dem pyramidenförmigen freien Ende 40 des Bolzens 39 angeordnet sind. Das dem Lagergehäuse 64 zugeordnete freie Ende 44' des Steges 44 ist dabei auf dem Paket von Tellerfedern 45 angeordnet. Da die Spannkennlinie der Tellerfedern 45 und der zurückgelegte Spannweg des Kniehebels 41 bekannt sind, kann über die Federkennlinie exakt vorbestimmt werden, welche Spannkraft durch die Tellerfedern 45 über die Kniehebel 41 auf die Hohlwelle 29 und somit auf die Gewindespindel 14, das Mittelstück 8, die Halteglieder 5, 6 und 7 auf das Werkstück 4 einwirkt. Durch den Drehzahlmesser 51 kann nämlich nach Erreichen des Übergangsbereiches zwischen der Zustellbewegung und der Spannbewegung die Position des Elektromotors 21 erfasst sein. Aufgrund der eingesetzten Tellerfedern 45 und der geometrisch bekannten axialen Bewegung der Hohlwelle 29 ist es nunmehr möglich, die Steuerelektronik derart zu programmieren, dass diese eine bestimmte Anzahl von Umdrehungen des Elektromotors 21 vornimmt, so dass mit einer definierten Spannkraft Fₛ auf die Oberfläche des Werkstückes 4 die drei Halteglieder 5, 6 und 7 einwirken.

Wenn der Spannzustand zwischen dem Werkstück 4 und den drei Haltegliedern 5, 6 und 7 gelöst werden soll, wird die Bewegungsrichtung des Elektromotors 21 umgeschaltet, so dass dieser in entgegen gesetzter Richtung bezüglich der Antriebs- bzw. Spannrichtung rotiert. Durch diese Maßnahme wird zunächst über den Flansch 24 die Welle 26 in Richtung einen das Antriebseinheitsgehäuse 63 verschließenden Deckels 18 zurückgedreht, und zwar so lange, bis der Stift 33 in die Vertiefung 32 aufgrund der von der Schraubendruckfeder 36 ausgeübten Rückstellkraft einrastet und somit über die Kupplung 62 erneut eine formschlüssige Wirkverbindung zwischen der Welle 26 und der Hohlwelle 29 besteht. Durch die in der Hohlwelle 29 angeordnete Schraubendruckfeder 46 wird der Bolzen 39 in Richtung des Deckels 18 zurückgestellt, so dass der Kniehebel 41 entlang des pyramidenförmigen freien Endes 40 zurück in seine Ausgangsposition bewegt und die Spannkraft der Tellerfeder 45 reduziert ist.

Sobald die Kupplung 62 die formschlüssige Wirkverbindung zwischen der Welle 26 und der Hohlwelle 29 erreicht hat, wird über die Hohlwelle 29 die Gewindespindel 14 in Rotation versetzt, so dass das Mittelstück 8 von dem Werkstück 4 wegbewegt wird, wodurch die drei Halteglieder 5, 6 und 7 aufschwenken und somit das Werkstück 4 freigeben.

Der Vollständigkeit halber werden auf konstruktive Maßnahmen zur Lagerung der Antriebseinheit 61 auf ein Festlager 19 und ein Loslager 20 verwiesen, durch die die Rotationskräfte, die durch das Lagergehäuse 64 auftreten, an das Antriebseinheitsgehäuse 63 weitergegeben werden. Des Weiteren ist in Umfangsrichtung der Hohlwelle 29 eine weitere Schraubendruckfeder 47 vorgesehen, durch die zusätzlich eine Rückstellkraft, die auf den Kniehebel 41 einwirkt, erzeugt ist.

Der Elektromotor 21 treibt folglich die Antriebseinheit 61 mit einer konstanten Rotationsgeschwindigkeit, und zwar sowohl während der Zustell- als auch während der Spannbewegung der drei Halteglieder 5, 6 und 7 an. Dadurch, dass die zwischen der Welle 26 und der Hohlwelle 29 eingebaute Kupplung 62 diese konstante Rotationsgeschwindigkeit überträgt, dreht die Gewindespindel 14 aus dem Verhältnis dieser Rotationsgeschwindigkeit und der Steigung des Trapezgewindes 30, so dass das Mittelstück 8 axial in Richtung auf das Werkstück 4 mit einer konstanten vorgegebenen Geschwindigkeit zubewegt ist. Dies ist als erste Zustellgeschwindigkeit des Mittelstückes 8 zu verstehen.

Sobald die Rollen 11 der drei Halteglieder 5, 6 und 7 die Oberfläche des Werkstückes 4 erreichen, steigt das Drehmoment, wie vorstehend erläutert, an, so dass die formschlüssige Wirkverbindung der Kupplung 62 zwischen der Welle 26 und der Hohlwelle 29 gelöst ist.

Die Welle 26 ist weiterhin in Rotation versetzt und bewegt sich durch die Entkupplung mit der Hohlwelle 29 schraubenförmig relativ zu dieser in Richtung auf das Werkstück 4 und übt dabei eine axial gerichtete Druckkraft auf den Bolzen 39 aus, der folglich dadurch in Längsrichtung 3 auf das Werkstück 4 verschoben ist. Somit werden die beiden gegenüberliegenden Kniehebel 41 aufgeweitet, denn das Gelenk 42 rutscht über das pyramidenförmige freie Ende 40 des Bolzens 39 nach außen. Diese durch den Kniehebel 41 und die axiale Bewegung der Welle 26 erzeugte Spannbewegung ist als zweite Zustellgeschwindigkeit des Mittelstückes 8 anzusehen..

Auch wenn das Mittelstück 8 lediglich geringfügig in Richtung auf das Werkstück 4 bewegt wird und die zweite Zustellgeschwindigkeit gegen null geht, ist eine solche vorhanden. Durch diese ist nämlich die Zustellkraft F_{Z} erzeugt. Dies bedeutet, rein physikalisch, dass durch die erste Zustellgeschwindigkeit eine Zustellkraft F_{Z} auf das Mittelstück 8 übertragen wird, wobei die Zustellkraft F_{Z} gegen null geht, da die Bewegungen des Mittelstückes 8 in Längsrichtung 3 nicht behindert sind. Wenn dagegen das Mittelstück 8 in Richtung auf das Werkstück 4 nicht mehr axial beweglich ist, sinkt die zweite Zusfellgeschwindigkeit gegen null, wodurch die Spannkraft F_{S} mittels der eingebauten Tellerfedern 45 aufgebaut ist.

Ausgehend von der Übergangsposition zwischen der Zustell- und der Spannbewegung des Mittelstückes 8 kann errechnet werden, wie viele Umdrehungen der Elektromotor 21 auszuführen hat, um eine vorgegebene Spannkraft F_{S} durch die drei Halteglieder 5, 6 und 7 auf das Werkstück 4 zu übertragen, da die Spannkraft aus den vorgegebenen Federkernlinien der Tellerfedern 45 und dem zurückgelegten axialen Weg des Bolzens 39 errechnet werden kann.

## Patentansprüche

1. Selbstzentrierende Lünette (1) zum Aufspannen und/oder zur Halterung eines Werkstückes (4) auf einer Drehmaschine, mit drei in einem Gehäuse (2) der Lünette (1) gelagerten und in einer gemeinsamen Ebene verstellbar gehaltenen Haltegliedern (5, 6, 7), von denen die beiden äußeren Halteglieder (5, 7) als spiegelbildlich zueinander angeordnete schwenkbar in dem Gehäuse (2) abgestützte Winkelhebel ausgebildet sind und das mittlere Halteglied (6) durch eine Antriebseinheit (61) und ein mit dieser trieblich verbundenen Mittelstück (8) axial in Richtung auf das Werkstück (4) verschiebbar in dem Gehäuse (2) geführt ist, wobei an dem Mittelstück (8) Steuerflächen (9) vorgesehen sind, mit denen die beiden äußeren Halteglieder (5, 7) mittels ihren inneren Enden (10) zusammenwirken,
**dadurch gekennzeichnet,**
**dass** die Antriebseinheit (61) durch einen Elektromotor (21) antreibbar ist, dass die Rotationsbewegungen des Elektromotors (21) durch die Antriebseinheit (61) in mindestens zwei unterschiedliche axiale Zustellgeschwindigkeiten des Mittelstückes (8) mit daraus resultierenden auf das Werkstück (4) gerichteten Kraftbeträgen (F_{Z}, F_{S}) umwandelbar sind, und dass zur Einstellung der jeweiligen Zustellgeschwindigkeit des Mittelstückes (8) zwischen diesem und dem Elektromotor (21) eine zwangläufig wirksame Kupplung (62) eingesetzt ist, mittels der die Antriebseinheit (61) in zwei unterschiedliche Schaltstellungen selbsttätig umschaltbar ist.

2. Lünette nach Anspruch 1,
**dadurch gekennzeichnet,**
**dass** die Antriebseinheit (61) aus einer Welle (26) und eine die Welle (26) bereichsweise in deren Längsrichtung (3) umgreifend Hohlwelle (29) besteht und dass die Welle (26) und die Hohlwelle (29) mittels der Kupplung (62) in kraftschlüssiger oder lösbar formschlüssiger Wirkverbindung stehen.

3. Lünette nach Anspruch 2,
**dadurch gekennzeichnet,**
**dass** die Kupplung (62) als federbelasteter Stift (33) ausgebildet ist, dass der Stift (33) in einer, vorzugsweise senkrecht zu der Längsachse (3) der Lünette (1) ausgerichteten, in der Welle (26) eingearbeiteten Bohrung (35) angeordnet ist und dass in der Innenseite der Hohlwelle (29) eine Vertiefung (32) vorgesehen ist, in die der Stift (33) während der Zustell- und Rückführbewegung der drei Halteglieder (5, 6, 7) eingreift und dass der Stift (33) aus der Vertiefung (32), während die Halteglieder (5, 6, 7) das Werkstück (4) einspannen, ausgefahren ist.

4. Lünette nach Anspruch 3,
**dadurch gekennzeichnet,**
**dass** senkrecht zu dem Stift (33) eine Bohrung (34) vorgesehen ist, in die eine Schraubendruckfeder (36) eingesetzt ist, dass die Schraubendruckfeder (36) mit ihrem freien Ende in eine in dem Stift (33) eingearbeitete Kerbe (38) gehalten ist und dass durch die Schraubendruckfeder (36) der Stift (33) unter Vorspannung in die Vertiefung (32) der Hohlwelle (29) eingedrückt ist.

5. Lünette nach Anspruch 4,
**dadurch gekennzeichnet,**
**dass** die Vertiefung (32) eine in Antriebsrotationsrichtung des Elektromotors (21) angeordnete schräge Fläche (32') aufweist, auf der der Stift (33) aufliegt, und dass die zu der schrägen Fläche (32') gegenüberliegende Wand der Vertiefung (32) radial verläuft.

6. Lünette nach Anspruch 3,
**dadurch gekennzeichnet,**
**dass** auf der Außenkontur der Welle (26) ein Gewinde (30), vorzugsweise ein Trapezgewinde, eingearbeitet ist und dass in die Innenseite der Hohlwelle (29) ein mit dem Trapezgewinde (30) der Welle (26) korrespondierendes Innengewinde (31) vorgesehen ist, die relativ zueinander in Abhängigkeit von der Position der Kupplung (62) bewegbar sind.

7. Lünette nach einem der vorgenannten Ansprüche,
**dadurch gekennzeichnet,**
**dass** die Welle (26) an einem Bolzen (39) plan anliegt, der fluchtend zu der Längsachse (3) der Lünette (1) verläuft, und dass das der Welle (26) gegenüberliegende freie Ende (40) des Bolzens (39) als sich in Richtung auf das Werkstück (4) verjüngende pyramidenförmige Anlagefläche ausgestaltet ist.

8. Lünette nach Anspruch 7,
**dadurch gekennzeichnet,**
**dass** auf der Außenseite der pyramidenförmigen Ebene (40) des Bolzens (39) mindestens ein Kniehebel (41) vorgesehen ist, die vorzugsweise paarweise gegenüberliegend zueinander angeordnet sind, dass zur Aufnahme des jeweiligen Kniehebels (41) in die Hohlwelle (29) eine Aussparung (50) eingearbeitet ist und dass die freien Enden (43') des jeweiligen Kniehebels (41) in einem dem Elektromotor (21) zugeordneten Lagergehäuses (64) angeordnet sind, in das ein Übertragungskörper (15) eingesetzt ist, und dass das dazu gegenüberliegende freie Ende (44') des Kniehebels (41) in der Hohlwelle (29) abgestützt ist, die mit einer mit dem Mittelstück (8) trieblich verbundenen Gewindespindel (14) in kraft- oder formschlüssiger Wirkverbindung steht.

9. Lünette nach Anspruch 8,
**dadurch gekennzeichnet,**
**dass** zwischen dem Bolzen (39) und der Gewindespindel (14) eine in diesem eingesetzte Schraubendruckfeder (46) angeordnet ist, durch die der Bolzen (39) mit einer in Richtung der Welle (26) wirkenden Rückstellkraft beaufschlagt ist.

10. Lünette nach einem der vorgenannten Ansprüche 1 bis 7,
**dadurch gekennzeichnet,**
**dass** das Mittelstück (8) in dem Gehäuse (2) der Lünette (1) axial verschiebbar und drehfest gehalten ist, und dass fluchtend zu der Längsachse (3) der Lünette (1) in das Mittelstück (8) eine Gewindebohrung (13) eingearbeitet ist, in die eine Gewindespindel (14) eingreift, dass die Gewindespindel (14) über einen senkrecht zu der Längsachse (3) der Lünette (1) verlaufenden Haltebolzen (16) an der Hohlwelle (29) befestigt ist, und dass zwischen einem dem Elektromotor (21) zugeordnetes Lagergehäuse (64) und der Hohlwelle (29), mindestens ein in einer in die Hohlwelle (29) eingearbeiteten Aussparung (50) eingesetzter Kniehebel (41) angeordnet ist, der an der Hohlwelle (29) und an einem dem Lagergehäuse (64) zugeordneten Übertragungskörper (15) mit seinen freien Enden (43, 44) anliegt.

11. Lünette nach einem der vorgenannten Ansprüche,
**dadurch gekennzeichnet,**
**dass** zwischen der Welle (26) und einem Flansch (24), der drehfest mit dem Elektromotor (2) und der Welle (26) verbunden ist, eine axial verschiebliche Wirkverbindung besteht, und dass die Welle (26) parallel zu der Längsachse (3) der Lünette (1) entlang der Innenkontur des Flansches (24) geführt gehalten ist.

12. Lünette nach einem der vorgenannten Ansprüche,
**dadurch gekennzeichnet,**
**dass** der Elektromotor (21) koaxial oder fluchtend zu der Längsachse (3) der Lünette (1) neben dem Gehäuse (2) angeordnet ist und dass der Elektromotor (21) die Antriebseinheit (61), zumindest teilweise, in deren Umfangsrichtung umgreift.

13. Lünette nach Anspruch 8 oder 10,
**dadurch gekennzeichnet,**
**dass** zwischen dem Lagergehäuse (64) und dem ersten freien Ende (43) des Kniehebels (41) eine oder mehrere Tellerfedern (45) angeordnet sind, durch die eine vorbestimmte Spannkraft auf die drei Halteglieder (5, 6, 7) während des Spannzustandes (F_{Z}) ausgeübt ist.

14. Lünette nach einem der vorgenannten Ansprüche,
**dadurch gekennzeichnet,**
**dass** der Antriebswehe (26) und dem Elektromotor (21) ein Winkelmesser (51) und eine Steuerelektronik zugeordnet sind und dass die Rotationsgeschwindigkeit des Elektromotors (21) durch die Steuerelektronik reduziert ist unmittelbar vor Erreichen des Anschlages zwischen den drei Haltegliedern (5, 6, 7) und dem Werkstück (4), und/oder dass durch die Winkelmessung des Elektromotors (21) eine Kraftsteuerung (F_{Z}) oder eine Wegmessung des Mittelstückes (8) ermöglicht ist, durch die die Anzahl der Rotationen des Elektromotors (21) während der Spannbewegung (F_{Z}) einstellbar ist.

## Claims

1. A self-centring support (1) for clamping and/or holding a workpiece (4) on a turning machine, with three holding elements (5, 6, 7) mounted in a housing (2) of the support (1) and held adjustably in a common plane, of which the two outer holding elements (5, 7) are configured as swivelling angled levers supported in the housing (2) and in a mirror-image arrangement with one another, and that the middle holding element (6) is guided in the housing (2) by means of a drive unit (61) and a middle piece (8) in a driveable connection with the drive unit (61) in such a way as to be axially moveable in the direction of the workpiece (4), with control surfaces (9) being provided on the middle piece (8) in which case the two outer holding elements (5, 7) interact with the control surfaces (9) by means of the inner ends (10) of the holding elements (5, 7),
**characterised in that,**
the drive unit (61) can be driven by an electric motor (21), that the rotational movements of the electric motor (21) can be converted by the drive unit (61) into at least two different axial advance speeds of the middle piece (8) with resulting force components (Fz, Fs) vectored onto the workpiece (4), and that in order to set the corresponding advance speed of the middle piece (8) between it and the electric motor (21), a clutch (62) with a constrained action is used, by means of which the drive unit (61) can be changed over automatically into two different shift positions.

2. The support in accordance with Claim 1,
**characterised in that,**
the drive unit (61) consists of a shaft (26) and a hollow shaft (29) enclosing the shaft (26) in certain areas in the longitudinal direction (3) of the shaft (26), and that the shaft (26) and the hollow shaft (29) are in a force-locking or releasable form-locking active connection by means of the clutch (62).

3. The support in accordance with Claim 2,
**characterised in that,**
the clutch (62) is configured as a spring-loaded pin (33), that the pin (33) is arranged in a hole (35) worked into the shaft (26) and which is preferably aligned at right angles to the longitudinal axis (3) of the support (1), and that a recess (32) is provided in the inside of the hollow shaft (29), in which the pin (33) engages during the advance and return movement of the three holding elements (5, 6, 7), and that the pin (33) is moved out of the recess (32) whilst the holding elements (5, 6, 7) clamp the workpiece (4).

4. The support in accordance with Claim 3,
**characterised in that,**
a hole (34) is provided at right angles to the pin (33) in which a coiled compression spring (36) is inserted, that the coiled compression spring (36) is held with its free end in a notch (38) worked into the pin (33), and that the coiled compression spring (36) presses the pin (33) into the recess (32) in the hollow shaft (29) under preload.

5. The support in accordance with Claim 4,
**characterised in that,**
the recess (32) has an inclined surface (32') arranged in the driving rotation direction of the electric motor (21) and the pin (33) is in contact with this surface (32'), and that the wall of the recess (32) opposite to the inclined surface (32') runs in a radial direction.

6. The support in accordance with Claim 3,
**characterised in that,**
a thread (30), preferably a trapezoidal thread, is worked into the outer contour of the shaft (26), and that an internal thread (31) corresponding with the trapezoidal thread (30) of the shaft (26) is provided in the inside of the hollow shaft (29), in which case the threads can be moved relative to one another according to the position of the clutch (62).

7. The support in accordance with one of the aforementioned claims,
**characterised in that,**
the shaft (26) lies flush against a pin (39) which runs flush with the longitudinal axis (3) of the support (1), and that the free end (40) of the pin (39) located opposite to the shaft (26) is embodied as a pyramid-shaped contact surface tapering in the direction of the workpiece (4).

8. The support in accordance with Claim 7,
**characterised in that,**
at least one bell-crank lever (41) is provided on the outside of the pyramid-shaped plane (40) of the pin (39), in which case the levers (41) are preferably arranged in pairs opposite to one another, that a recess (50) is worked into the hollow shaft (29) in order to accommodate the corresponding bell-crank lever (41), and that the free ends (43') of the corresponding bell-crank lever (41) are arranged in a bearing housing (64) allocated to the electric motor (21) with a transmission element (15) inserted into the bearing housing (64), and that the free end (44') of the bell-crank lever (41) located opposite this is supported in the hollow shaft (29) which is situated in a force-locking or form-locking active connection with a threaded spindle (14) that is in a driveable connection with the middle piece (8).

9. The support in accordance with Claim 8,
**characterised in that,**
a coiled compression spring (46) is arranged between the pin (39) and the threaded spindle (14) and is inserted in this threaded spindle (14), by means of which the pin (39) is acted upon by a return force acting in the direction of the shaft (26).

10. The support in accordance with one of the aforementioned Claims 1 to 7,
**characterised in that,**
the middle piece (8) is held in the housing (2) of the support (1) in an axially adjustable and rotationally fixed manner, and that a threaded hole (13) is worked into the middle piece (8) flush with the longitudinal axis of the support (1) and a threaded spindle (14) engages in the threaded hole (13), that the threaded spindle (14) is attached to the hollow shaft (29) by means of a holding pin (16) running at right angles to the longitudinal axis (3) of the support (1), and that at least one bell-crank lever (41) inserted in a recess (50) worked into the hollow shaft (29) is arranged between a bearing housing (64) allocated to the electric motor (21) and the hollow shaft (29), in which case the bell-crank lever (41) is in contact with its free ends (43, 44) on a transmission element (15) allocated to the bearing housing (64).

11. The support in accordance with one of the aforementioned claims,
**characterised in that,**
there is an axially movable active connection between the shaft (26) and a flange (24) which is connected in a rotationally fixed arrangement with the electric motor (2) and the shaft (26), and that the shaft (26) is held in parallel with the longitudinal axis (3) of the support (1) so that it is guided along the inside contour of the flange (24).

12. The support in accordance with one of the aforementioned claims,
**characterised in that,**
the electric motor (21) is arranged coaxially or flush with the longitudinal axis (3) of the support (1) adjacent to the housing (2) and that the electric motor (21) encloses the drive unit (61) at least partially in the circumferential direction of the drive unit (61).

13. The support in accordance with Claim 8 or 10,
**characterised in that,**
one or more dished springs (45) are arranged between the bearing housing (64) and the first free end (43) of the bell-crank lever (41), by means of which a predetermined clamping force is exerted on the three holding elements (5, 6, 7) throughout the clamped condition (Fz).

14. The support in accordance with one of the aforementioned claims,
**characterised in that,**
the drive shaft (26) and the electric motor (21) have an angle measuring device (51) and an electronic control unit allocated to them, and that the rotation speed of the electric motor (21) is reduced by the electronic control unit directly before reaching the stop between the three holding elements (5, 6, 7) and the workpiece (4), and/or that the angle measurement of the electric motor (21) permits force control (Fz) or an angle measurement of the middle piece (8), by means of which the number of rotations of the electric motor (21) can be set during the clamping movement (Fz).

## Revendications

1. Lunette autocentrée (1) pour le serrage et/ou le support d'une pièce à usiner (4) sur un tour, avec trois éléments de retenue (5, 6, 7) disposés de manière réglable dans un plan commun dans un boîtier (2) de la lunette (1), dont les deux éléments de retenue extérieurs (5, 7) sont conçus sous la forme de leviers angulaires renversés l'un par rapport à l'autre et pivotant dans le boîtier (2) et dont l'élément de retenue central (6) est axialement déplaçable en direction de la pièce à usiner (4) dans le boîtier (2) moyennant une unité d'entraînement (61) et un élément central (8) raccordé par entraînement à celle-ci, l'élément central (8) portant des faces de commande (9) avec lesquelles collaborent les éléments de retenue extérieurs (5, 7) par l'intermédiaire de leurs extrémités intérieures (10),
**caractérisé en ce que**
l'unité d'entraînement (61) se laisse entraîner par un moteur électrique (21), que les mouvements de rotation du moteur électrique (21) se laissent transformer par l'unité d'entraînement (61) en au moins deux vitesses d'avance axiales différentes de l'élément central (8) avec des forces résultantes (F_{z}, Fₛ) dirigées vers la pièce à usiner (4), et que pour le réglage de la vitesse d'avance respective de l'élément central (8), il est prévu entre celui-ci et le moteur électrique (21) un accouplement à double effet forcé (62) permettant de commuter automatiquement l'unité d'entraînement (61) en deux positions de commande différentes.

2. Lunette d'après la revendication 1,
**caractérisé en ce que**
l'unité d'entraînement (61) consiste d'un arbre (26) et d'un arbre creux (29) entourant l'arbre (26) sur une certaine distance longitudinale (3), et que l'arbre (26) et l'arbre creux (29) sont mécaniquement bloqués ou bloqués de manière séparable par un accouplement (62).

3. Lunette d'après la revendication 2,
**caractérisé en ce que**
l'accouplement (62) est conçu sous la forme d'un goujon (33) soumis à la force d'un ressort, que le goujon (33) est disposé dans un alésage (35) pratiqué dans l'arbre (26), de préférence perpendiculairement à l'axe longitudinal (3) de la lunette (1) et que dans la face intérieure de l'arbre creux (29), il est prévu un évidement (32) dans lequel s'engrène le goujon (33) durant les mouvements d'avance et de retour des trois éléments de retenue (5, 6, 7), et que le goujon (33) est sorti de l'évidement (32) tant que les éléments de retenue (5, 6, 7) serrent la pièce à usiner (4).

4. Lunette d'après la revendication 3,
**caractérisé en ce que**
perpendiculairement au goujon (33) il est prévu un alésage (34), dans lequel il est inséré un ressort cylindrique de pression (36), que l'extrémité libre du ressort cylindrique de pression (36) est retenue dans une encoche (38) pratiquée dans le goujon (33) et que le ressort cylindrique de pression (36) presse le goujon (33) dans l'évidement (32) de l'arbre creux (29).

5. Lunette d'après la revendication 4,
**caractérisé en ce que**
l'évidement (32) possède une face oblique (32') disposée en direction de rotation d'entraînement du moteur électrique (21), sur laquelle porte le goujon (33), et que la paroi de l'évidement (32), opposée à la face oblique (32'), est orientée en direction radiale.

6. Lunette d'après la revendication 3,
**caractérisé en ce que**
sur le contour extérieur de l'arbre (26), il est pratiqué un filetage (30) de préférence trapézoïdal et que dans la face intérieure de l'arbre creux (29), il est prévu un taraudage (31) collaborant avec le filetage trapézoïdal (30) de l'arbre (26), ceux-ci se laissant déplacer relativement l'un par rapport à l'autre en dépendance de la position de l'accouplement (62).

7. Lunette d'après une des revendications précédentes,
**caractérisé en ce que**
l'arbre (26) porte plane sur un boulon (39) disposé en alignement précis par rapport à l'axe longitudinal (3) de la lunette (1) et que l'extrémité libre (40) du boulon (39) opposée à l'arbre (26) est conçue en tant que face de portée sous la forme de pyramide qui s'amincit en direction de la pièce à usiner (4).

8. Lunette d'après la revendication 7,
**caractérisé en ce que**
sur la face extérieure du plan pyramidal (40) du boulon (39), il est prévu au moins un levier angulaire (41) disposé(s) de préférence par paires opposées les unes aux autres, que pour le logement du levier angulaire (41) respectif, il est prévu un évidement (50) dans l'arbre creux (29), et que les extrémités libres (43') du levier angulaire respectif (41) sont disposées dans un boîtier (64) assigné au moteur électrique (21), dans lequel il est inséré un corps de transmission (15), et que l'extrémité libre opposée correspondante (44') du levier angulaire (41) s'appuie dans l'arbre creux (29) qui est bloqué géométriquement ou par adhérence avec une broche filetée (14) raccordée par entraînement avec l'élément central (8).

9. Lunette d'après la revendication 8,
**caractérisé en ce que**,
entre le boulon (39) et la broche filetée (14), il est inséré dans le boulon un ressort cylindrique de pression (46) qui soumet le boulon (39) à une force de rappel agissant en direction de l'arbre (26).

10. Lunette d'après une des revendications précédentes 1 à 7,
**caractérisé en ce que**
l'élément central (8) se laisse déplacer axialement sans torsion dans le boîtier (2) de la lunette (1) et que, en alignement précis avec l'axe longitudinal (3) de la lunette (1), il est prévu dans l'élément central (8) un taraudage (13) dans lequel s'engrène une broche filetée (14), que moyennant un boulon de retenue (16) orienté perpendiculairement sur la l'axe longitudinal (3) de la lunette (1), la broche filetée (14) est fixée sur l'arbre creux (29) et que, entre le boîtier (64) assigné au moteur électrique (21) et l'arbre creux (29), il est prévu, inséré dans un évidement (50) pratiqué dans l'arbre creux (29), au moins un levier angulaire (41) dont les extrémités libres (43, 44) portent sur l'arbre creux (29) et sur un corps de transmission (15) assigné au boîtier (64).

11. Lunette d'après une des revendications précédentes,
**caractérisé en ce que**,
entre l'arbre (26) et une bride (24) retenue sur le moteur électrique (21) et sur l'arbre (26), il existe un raccord d'entraînement à effet axial, et que l'arbre (26) est retenu parallèlement à l'axe longitudinal (3) de la lunette (1) le long du contour intérieur de la bride (24).

12. Lunette d'après une des revendications précédentes,
**caractérisé en ce que**
le moteur électrique (21) est monté de manière coaxiale ou en alignement précis avec l'axe longitudinal (3) de la lunette (1) à côté du boîtier (2), et que le moteur électrique (21) entoure l'unité d'entraînement (61) du moins partiellement sur son pourtour.

13. Lunette d'après les revendications 8 ou 10,
**caractérisé en ce que**,
entre le boîtier (64) et la première extrémité libre (43) du levier angulaire (41), il est prévu un ou plusieurs ressorts Belleville (45) qui assurent pendant l'état de serrage (F_{z}), une force de tarage prédéterminée sur les trois éléments de retenue (5, 6, 7).

14. Lunette d'après une des revendications précédentes,
**caractérisé en ce que**,
à l'arbre d'entraînement (26) et au moteur électrique (21), il est assigné un goniomètre (51) et une électronique de commande, et que directement avant l'atteinte de la butée entre les trois éléments de retenue (5, 6, 7) et la pièce à usiner (4), électronique de commande réduit la vitesse de rotation du moteur électrique (21), et/ou que la mesure d'angle du moteur électrique (21) permet la commande de la force (F_{z}) ou la mesure de la course de l'élément central (8), ce qui permet de régler le nombre de rotations du moteur électrique (21) lors du mouvement de serrage (F_{z}).
